Europäisches Patentamt

European Patent Office

Office européen des brevets

(11) Numéro de publication : **0 298 860 B1**

(12)
# FASCICULE DE BREVET EUROPEEN

(45) Date de publication du fascicule du brevet :
**27.05.92 Bulletin 92/22**

(51) Int. Cl.⁵ : **C04B 35/48, B22D 41/08**

(21) Numéro de dépôt : **88401752.6**

(22) Date de dépôt : **05.07.88**

(54) **Composition réfractaire pour plaques-tiroirs et son procédé de fabrication.**

(30) Priorité : **07.07.87 FR 8709643**

(43) Date de publication de la demande :
**11.01.89 Bulletin 89/02**

(45) Mention de la délivrance du brevet :
**27.05.92 Bulletin 92/22**

(84) Etats contractants désignés :
**BE DE ES**

(56) Documents cités :
**EP-A- 0 218 026
US-A- 4 585 485
CHEMICAL ABSTRACTS, vol. 104, no. 22, juin
1986, page 339, résumé no. 191794k, Columbus, Ohio, US; & JP-A-60 180 950(HARIMA
REFRACTORIES CO., LTD) 14-09-1985**

(56) Documents cités :
**CHEMICAL ABSTRACTS, vol. 103, no. 20,
novembre 1985, page 303, résumé no.
165210b, Columbus, Ohio, US; & JP-A-60 96
567(HARIMA REFRACTORIES CO. LTD) 30-
05-1985**

(73) Titulaire : **VESUVIUS FRANCE S.A.
68, rue de la Gare
F-59750 Feignies (FR)**

(72) Inventeur : **Rancoule, Gilbert
54 Vauban A Avenue de l'Europe
F-59600 Maubeuge (FR)**
Inventeur : **Morris, Martin
Box 94 R-D 1
Imperial, PA 15126 (US)**

(74) Mandataire : **Mongrédien, André et al
c/o SOCIETE DE PROTECTION DES
INVENTIONS 25, rue de Ponthieu
F-75008 Paris (FR)**

EP 0 298 860 B1

## Description

La présente invention a pour objet une composition réfractaire utilisable pour la réalisation de plaques-tiroirs utilisées pour contrôler les jets de coulée de métal liquide ainsi qu'un procédé de préparation de ce matériau.

Dans l'industrie métallurgique, il est nécessaire de pouvoir contrôler les jets d'acier ou autres métaux liquides qui s'écoulent par le fond d'une poche de coulée soit dans un distributeur, soit dans une lingotière. En effet, au début de la coulée, la quantité de métal contenue dans la poche étant importante, la hauteur de liquide est élevée et la pression est forte il y a donc un fort débit. Au contraire, en fin de coulée, la quantité de liquide contenue dans la poche étant faible, la hauteur de celui-ci est également faible et on a une pression réduite, ce qui entraîne un débit plus faible. Afin d'obtenir un débit constant, il est nécessaire de pouvoir contrôler le jet. Ceci est obtenu grâce à des systèmes mécaniques montés sous les poches de coulée et qui comportent des plaques coulissant horizontalement afin de boucher plus ou moins les buses de coulée. Ces plaques, comme les autres dispositifs du système de coulée, sont soumises à des contraintes sévères en cours d'utilisation car ces éléments subissent des cycles thermiques de grande amplitude, notamment quand la durée entre deux coulées consécutives est importante.

Les éléments qui souffrent le plus sont la poche de coulée, les plaques-tiroirs et le mécanisme de commande de ces dernières. En effet, ces éléments subissent une pression importante et, comme il est souvent nécessaire d'interrompre la coulée, par exemple pour déplacer la poche d'une lingotière à la suivante, les plaques subissent des cycles thermiques. Si l'on utilise un répartiteur, c'est-à-dire un récipient de faible hauteur avec un certain nombre d'orifices permettant une coulée simultanée dans plusieurs lingotières, le répartiteur subit moins de chocs thermiques et sa durée de vie est plus longue.

Les principales détériorations qui peuvent affecter les plaques-tiroirs sont essentiellement l'écaillage, la fissuration (qui peut aller jusqu'à provoquer des ruptures) et le collage d'une couche plus ou moins épaisse de métal : ce collage ne résulte pas en général d'une solidification du métal au contact du matériau constitutif des plaques, mais plutôt de réactions chimiques entre le métal et ce matériau. De nombreux matériaux ont été proposés jusqu'à ce jour pour la réalisation des plaques-tiroirs, mais aucun ne donne des résultats entièrement satisfaisants car aucun ne présente simultanément une bonne tenue à l'écaillage, à la fissuration et au collage.

Le brevet américain US-A-4 585 485 décrit une composition réfractaire pour la coulée des métaux fondus, qui comprend :
- un matériau réfractaire comprenant du corindon et de la zircone monoclinique avec 80 à 98% en poids de $Al_2O_3$ et 2 à 20% en poids de $ZrO_2$,
- une poudre à base de silicium,
- une poudre à base de carbone, et
- éventuellement un matériau réfractaire base de mullite, de baddeleyite et corindon avec $Al_2O_3$, $ZrO_2$ et $SiO_2$, et d'autres réfractaires et/ou de l'alumine.

Cette composition présente certains inconvénients. En effet, elle n'a pas une tenue suffisante à la corrosion par l'acier fondu en raison de sa faible teneur en zircone, et la présence d'un constituant réfractaire du type mullite est préjudiciable à la tenue de la composition (collage, réaction chimique avec l'acier) car ces réfractaires contiennent de la silice.

La présente invention a pour but de remédier à ces inconvénients en proposant une composition réfractaire pour plaques-tiroirs présentant une bonne résistance aussi bien à l'écaillage qu'à la corrosion ou au collage.

Selon la principale caractéristique de la composition réfractaire objet de l'invention, celle-ci comprend, en poids :
- de 70 à 81% d'alumine frittée et/ou calcinée,
- de 10 à 20% de zircone-alumine comprenant en poids de 20 à 40% de zircone et de 60 à 80% d'alumine,
- de 1 à 4% de silicium, et
- de 6 à 22% de carbone.

De préférence, la proportion de zircone-alumine est comprise entre 15 et 20% en poids et ce constituant comprend essentiellement du corindon et de la zircone monoclinique.

Quant à la proportion de silicium, elle est de préférence comprise entre 1 et 2% en poids.

L'invention a également pour objet un procédé de préparation de cette composition réfractaire en vue de fabriquer un objet donné. Selon la principale caractéristique de ce procédé, celui-ci comprend les étapes suivantes consistant à :

(a) - réaliser un mélange comportant, en poids :
- de 70 à 81% d'alumine frittée et/ou calcinée se trouvant sous forme divisée,
- de 10 à 20% de zircone-alumine se trouvant sous forme divisée et comprenant, en poids, de 20 à 40% de zircone et de 60 à 80% d'alumine,

– de 1 à 4% d'une poudre contenant du silicium,

– de 2 à 7% de carbone sous forme divisée, et

– de 4 à 15% d'un liant contenant du carbone volatil ;

(b) - agiter intensément le mélange ;

(c) - donner au mélange la forme de l'objet à fabriquer, et

(d) - soumettre ce mélange un traitement thermique en atmosphère réductrice, ce traitement étant effectué à une température comprise entre 900 et 1500°C, et de préférence entre 1300 et 1500°C, pendant une durée de 1 à 10 heures.

L'expression "se trouvant sous forme divisée" signifie que le constituant considéré se trouve sous forme de particules de faibles dimensions, c'est-à-dire sous forme de poudre, de grains, de billes, etc.

Selon un mode préféré de mise en oeuvre de ce procédé, la proportion de zircone-alumine dans le mélange est comprise entre 15 et 20% en poids et la zircone-alumine contient essentiellement du corindon et de la zircone monoclinique.

Quant à la poudre contenant du silicium, elle peut être constituée soit de silicium pur, soit d'un composé d'aluminium et de silicium. Le mot "poudre" doit être pris dans son sens le plus général et signifie que ce composé se trouve sous forme divisée, c'est-à-dire sous forme de grains, particules solides, billes, etc. De préférence, les grains ou particules de silicium ont des dimensions inférieures ou égales 150 µm et la proportion de silicium dans le mélange est comprise entre 1 et 2% en poids.

Eventuellement, le procédé peut comporter les étapes supplémentaires suivantes consistant à :

(e) - imprégner le mélange avec un produit d'imprégnation, et

(f) - soumettre le mélange à un étuvage pour éliminer les produits volatils en excès.

De préférence, le produit d'imprégnation est choisi parmi les goudrons, les brais et les résines tandis que la quantité de produit d'imprégnation est inférieure ou égale à 14% en poids.

L'utilisation de composants céramiques ayant un faible coefficient de dilatation thermique tels que l'alumine et la zircone-alumine, permet d'améliorer la résistance à la corrosion par l'acier et par le laitier.

Les inventeurs ont montré que les meilleurs résultats sont obtenus lorsque la zircone-alumine utilisée contient de 20 à 40% de zircone et de 60 à 80% d'alumine. En effet, si ce constituant contient moins de 20% en poids de zircone, matériau qui a une bonne résistance la corrosion et une grande dureté, ces qualités sont notablement réduites dans le composé. Mais, si la quantité de zircone dépasse 40% en poids, la résistance mécanique de la zircone-alumine diminue et le volume de zircone monoclinique varie rapidement, ce qui entraîne la création de contraintes dans le matériau réfractaire.

La zircone-alumine est utilisée dans la composition réfractaire pour créer une différence de dilatation thermique afin de diminuer les contraintes dues aux chocs thermiques. L'utilisation de ce composé au lieu d'autres matériaux tels que la mullite ou la zircone-mullite, qui ont des coefficients de dilatation thermique faibles, permet de diminuer la présence de silice dans le réfractaire. En effet, la silice présente dans tous les cas un très mauvais comportement vis-à-vis de la corrosion par l'acier, ce qui peut expliquer dans la plupart des cas le collage de l'acier à la surface des plaques-tiroirs.

Dans les compositions réfractaires employées pour la réalisation de plaques-tiroirs utilisées jusqu'à présent, on a utilisé la zircone-mullite pour éviter les chocs thermiques et améliorer la résistance à l'écaillage, mais la présence de silice entraîne certains inconvénients dus aux réactions chimiques à la surface de la plaque-tiroir.

La proportion de silice ou de silicium métallique doit donc être maintenue assez faible afin de réduire la concentration des silicates afin d'éviter les réactions entre la composition réfractaire et l'acier. D'autre part, le silicium métallique (ou d'autres métaux si le silicium est amené sous forme d'un composé d'aluminium et de silicium) présente l'inconvénient de diminuer la taille des pores de la plaque-tiroir, entraînant une mauvaise imprégnation de la plaque dans le cas où, au cours de la fabrication, on prévoit une étape supplémentaire d'imprégnation.

Le pourcentage de zircone-alumine dans la composition permet de maîtriser la résistance aux chocs thermiques et permet d'éviter les contraintes thermiques dans le réfractaire en faisant varier le coefficient de dilatation thermique de l'ensemble. Si la proportion de zircone-alumine dans la composition dépasse 30% ou si l'on ajoute d'autres composants tels que la zircone-mullite ayant un faible coefficient de dilatation thermique, on a un plus gros bisque d'écaillage.

La présence de silicium dans une telle composition a deux objectifs : d'une part, obtenir une bonne résistance mécanique et, d'autre part, améliorer la résistance à l'oxydation. On a pu observer que les meilleurs résultats sont obtenus avec une proportion faible de silicium, c'est-à-dire de 1 à 4% et de préférence de 1 à 2% en poids.

Quant à la présence de carbone dans une telle composition réfractaire, elle améliore la résistance au collage, mais le risque d'oxydation augmente lorsque la proportion de carbone augmente.

L'utilisation de carbone introduit sous forme pulvérulente est due à la nécessité de catalyser la formation de carbure de silicium afin d'améliorer la coulabilité du mélange utilisé pour réaliser les plaques-tiroirs selon la présente invention et d'améliorer les qualités chimiques de cette plaque pour diminuer sa mouillabilité par l'acier. Si le pourcentage de carbone mis dans la composition sous forme pulvérulente dépasse 7% en poids dans le produit fini, le matériau sera moins rigide et la résistance à l'oxydation diminuera, ce qui entraînera des problèmes en surface pendant l'utilisation.

Quant à l'étape d'imprégnation, elle n'est pas indispensable, mais permet d'augmenter la durée de vie des plaques réfractaires par une limitation des effets de mouillage de la plaque par l'acier : on améliore ainsi la résistance au collage.

La fabrication d'une plaque-tiroir ou autre objet réfractaire à partir de la composition réfractaire selon la présente invention se déroule de la manière suivante :

On mélange d'abord les différents constituants amenés sous forme de poudre ou sous toute autre forme divisée et on soumet le mélange à une agitation intense, par exemple à l'aide d'une turbine. Le mélange comprend également un liant, par exemple une résine phénolique si l'on opère à basse température ou un brai si l'on opère à température élevée. On donne ensuite au mélange la forme de la plaque ou de l'objet à réaliser, par exemple à l'aide d'une presse hydraulique ou mécanique.

La plaque est ensuite soumise à un traitement thermique fonction du liant utilisé, ce traitement étant effectué dans une atmosphère réductrice. La température du traitement est comprise entre 900 et 1500°C, de préférence entre 1300 et 1500°C, afin de donner à la composition réfractaire de bonnes propriétés de résistance à l'abrasion et à l'oxydation ainsi qu'une bonne résistance aux chocs thermiques et une bonne distribution des dimensions des pores. En effet, c'est vers 800-900°C que commence à se produire l'élimination des matières volatiles contenues dans les résines et la formation des chaînes carbonées. Et c'est à des températures de l'ordre de 1300 à 1500°C qu'ont lieu les réactions de type céramique et notamment la formation de carbure de silicium. Quant à la durée de traitement, elle peut inclure ou non une phase de montée en température et sera choisie par l'homme du métier en fonction de chaque cas particulier, notamment en fonction du type de four et du type de cuisson.

Si nécessaire, les plaques peuvent être imprégnées avec un ou plusieurs produits d'imprégnation tels que les brais, les goudrons, l'huile de goudron ou également des résines synthétiques ou organiques. Dans ce cas, il est nécessaire de prévoir une étape supplémentaire d'étuvage afin d'éliminer les matières volatiles en excès et de ramener la composition aux valeurs désirées.

A titre d'essai, on a réalisé plusieurs plaques-tiroirs à partir de diverses compositions réfractaires conformes à la présente invention. Les résultats sont rassemblés dans le tableau ci-dessous.

Les exemples 1 à 4 concernent des compositions conformes à l'invention tandis que l'exemple 5 concerne une composition de l'art antérieur. Dans tous les cas, on a utilisé une zircone-alumine contenant environ 25% en poids de zircone et 75% en poids d'alumine. Le traitement thermique a été effectué dans un four maintenu à 1400°C pendant 1 heure et il n'y a pas eu d'étape supplémentaire d'imprégnation.

**T A B L E A U**

| | EX.1 | EX.2 | EX.3 | EX.4 | EX.5 comparatif |
|---|---|---|---|---|---|
| alumine | 78 | 75 | 71 | 70 | 83 |
| zircone-alumine | 10 | 15 | 15 | 20 | 5 |
| carbone | 4 | 2 | 4 | 2 | 2 |
| brai | - | - | - | - | - |
| résine | 6 | 6 | 6 | 6 | 6 |
| poudre de silicium | 2 | 2 | 4 | 2 | 4 |
| gravité spécifique apparente $(g/cm^3)$ | 3,62 | 3,68 | 3,65 | 3,71 | 3,58 |
| porosité (%) | 13,4 | 16,5 | 14,7 | 14,7 | 15,6 |
| densité | 3,13 | 3,08 | 3,11 | 3,18 | 3,10 |
| module de rupture $(10^5$ Pa) | 192 | 159 | 226 | 120 | 245 |
| résistance à l'écaillage | bonne | excellente | excellente | excellente | mauvaise |
| résistance au collage | excellente | excellente | bonne | excellente | moyenne |
| résistance à la corrosion | excellente | excellente | excellente | excellente | bonne |

Ainsi, la composition réfractaire objet de l'invention présente des avantages particulièrement intéressants puisqu'elle donne, comme on le voit d'après le tableau ci-dessus, une très bonne résistance aussi bien à l'écaillage qu'au collage ou à la corrosion.

**Revendications**

1. Composition réfractaire pour plaques-tiroirs utilisées dans la coulée de métaux liquides, caractérisée en ce qu'elle comprend, en poids :
   - de 70 à 81% d'alumine frittée et/ou calcinée,
   - de 10 à 20% de zircone-alumine comprenant en poids de 20 à 40% de zircone et de 60 à 80% d'alumine,
   - de 1 à 4% de silicium, et
   - de 6 à 22% de carbone.

2. Composition réfractaire selon la revendication 1, caractérisée en ce que la proportion de zircone-alumine est comprise entre 15 et 20% en poids.

3. Composition réfractaire selon la revendication 1, caractérisée en ce que la zircone-alumine comprend essentiellement du corindon et de la zircone monoclinique.

4. Composition réfractaire selon la revendication 1, caractérisée en ce que la proportion de silicium est comprise entre 1 et 2% en poids.

5. Procédé de préparation d'une composition réfractaire en vue de fabriquer un objet donné, caractérisé en ce qu'il comprend les étapes suivantes consistant à :

(a) - réaliser un mélange comportant en poids :
– de 70 à 81% d'alumine frittée et/ou calcinée se trouvant sous forme divisée,
– de 10 à 20% de zircone-alumine se trouvant sous forme divisée et comprenant, en poids, de 20 à 40% de zircone et de 60 à 80% d'alumine,
– de 1 à 4% d'une poudre contenant du silicium,
– de 2 à 7% de carbone sous forme divisée, et
– de 4 à 15% d'un liant contenant du carbone volatil ;

(b) - agiter intensément le mélange ;

(c) - donner au mélange la forme de l'objet à fabriquer, et

(d) - soumettre ce mélange un traitement thermique en atmosphère réductrice, ce traitement étant effectué à une température comprise entre 900 et 1500°C, et de préférence entre 1300 et 1500°C, pendant une durée de 1 à 10 heures.

6. Procédé selon la revendication 5, caractérisé en ce que la proportion de zircone-alumine dans le mélange est comprise entre 15 et 20% en poids.

7. Procédé selon la revendication 5, caractérisé en ce que la zircone-alumine contient essentiellement du corindon et de la zircone monoclinique.

8. Procédé selon la revendication 5, caractérisé en ce que ladite poudre contenant du silicium est composée essentiellement de silicium pur.

9. Procédé selon la revendication 5, caractérisé en ce que ladite poudre est constituée d'un composé d'aluminium et de silicium.

10. Procédé selon la revendication 5, caractérisé en ce que la taille des grains de silicium est inférieure ou égale à 150 micromètres.

11. Procédé selon la revendication 5, caractérisé en ce que la proportion de silicium dans le mélange est comprise entre 1 et 2% en poids.

12. Procédé selon la revendication 5, caractérisé en ce qu'il comporte en outre les étapes suivantes consistant à :

(e) - imprégner le mélange avec un produit d'imprégnation, et

(f) - soumettre le mélange à un étuvage pour éliminer les produits volatils en excès.

13. Procédé selon la revendication 12, caractérisé en ce que le produit d'imprégnation est choisi parmi les goudrons, les brais et les résines.

14. Procédé selon la revendication 12, caractérisé en ce que la proportion du produit d'imprégnation est inférieure ou égale à 14% en poids.


**Patentansprüche**

1. Feuerfeste Verbindung für Schiebeverschlußplatten, die beim Gießen von flüssigen Metallen verwendet werden, dadurch gekennzeichnet, daß sie nach Gewicht umfaßt:
– von 70 bis 81% gesintertes und/oder gebranntes Aluminiumoxyd,
– von 10 bis 20% Zirkonoxyd-Aluminiumoxyd, das nach Gewicht von 20 bis 40% Zirkonoxyd und von 60 bis 80% Aluminiumoxyd umfaßt,
– von 1 bis 4% Silizium, und
– von 6 bis 22% Kohlenstoff.

2. Feuerfeste Verbindung nach Anspruch 1, dadurch gekennzeichnet, daß der Zirkonoxyd-Aluminiumoxydanteil zwischen 15 und 20 Gewichtsprozent liegt.

3. Feuerfeste Verbindung nach Anspruch 1, dadurch gekennzeichnet, daß das Zirkonoxyd-Aluminiumoxyd im wesentlichen Korund und monoklines Zirkonoxyd aufweist.

4. Feuerfeste Verbindung nach Anspruch 1, dadurch gekennzeichnet, daß der Siliziumanteil zwischen 1 und 2 Gewichtsprozent liegt.

5. Verfahren zum Herstellen einer feuerfesten Verbindung, um einen gegebenen Gegenstand herzustel-

EP 0 298 860 B1

len, dadurch gekennzeichnet, daß es folgende Verfahrensschritte umfaßt, die darin bestehen:

(a) - eine Mischung herzustellen, die nach Gewicht aufweist:

– von 70 bis 81% gesintertes und/oder gebranntes Aluminiumoxyd in getrennter Form

– von 10 bis 20% Zirkonoxyd-Aluminiumoxyd in getrennter Form, das nach Gewicht von 20 bis 40% Zirkonoxyd und von 60 bis 80% Aluminiumoxyd umfaßt,

– von 1 bis 4% eines Silizium enthaltenden Pulvers,

– von 2 bis 7% Kohlenstoff in getrennter Form, und

– von 4 bis 15% eines Binders, der flüchtigen Kohlenstoff enthält;

(b) - die Mischung intensiv zu rühren;

(c) - der Mischung die Form des herzustellenden Gegenstands zu geben, und

(d) - diese Mischung einer thermischen Behandlung unter reduzierender Atmosphäre zu unterwerfen, wobei diese Behandlung bei einer Temperatur zwischen 900 und 1500°C und vorzugsweise zwischen 1300 und 1500°C während einer Dauer von 1 bis 10 Stunden durchgeführt wird.

6. Verfahren nach Anspruch 5, dadurch gekennzeichnet, daß der Zirkonoxyd-Aluminiumoxydanteil zwischen 15 und 20 Gewichtsprozent liegt.

7. Verfahren nach Anspruch 5, dadurch gekennzeichnet, daß das Zirkonoxyd-Aluminiumoxyd im wesentlichen Korund und monoklines Zirkonoxyd aufweist.

8. Verfahren nach Anspruch 5, dadurch gekennzeichnet, daß das Silizium enthaltende Pulver im wesentlichen aus reinem Silizium besteht.

9. Verfahren nach Anspruch 5, dadurch gekennzeichnet, daß das Pulver aus einer Mischung aus Aluminium und Silizium besteht.

10. Verfahren nach Anspruch 5, dadurch gekennzeichnet, daß die Größe der Siliziumkörmer kleiner oder gleich 150 Mikrometern ist.

11. Verfahren nach Anspruch 5, dadurch gekennzeichnet, daß der Siliziumanteil in der Mischung zwischen 1 und 2 Gewichtsprozent liegt.

12. Verfahren nach Anspruch 5, dadurch gekennzeichnet, daß es außerdem die folgenden Verfahrensschritte umfaßt, die darin bestehen:

(e) - die Mischung mit einem Imprägnierungsmittel zu imprägnieren, und

(f) - die Mischung einer Trocknung zu unterwerfen, um die überschüssigen flüchtigen Bestandteile zu entfernen.

13. Verfahren nach Anspruch 12, dadurch gekennzeichnet, daß das Imprägnierungsmittel ausgewählt wird aus den Teeren, den Pechen und den Harzen.

14. Verfahren nach Anspruch 12, dadurch gekennzeichnet, daß der Anteil des Imprägniermittels kleiner oder gleich 14 Gewichtsprozent ist.


## Claims

1. Refractory composition for sliding gate plates used in the casting of liquid metals, characterized in that it comprises by weight

– 70 to 81% of calcined and/or sintered alumina,

– 10 to 20% of zirconia-alumina incorporating by weight 20 to 40% zirconia and 60 to 80% alumina,

– 1 to 4% silicon and

– 6 to 22% carbon.

2. Refractory composition according to claim 1, characterized in that the zirconia-alumina proportion is between 15 and 20% by weight.

3. Refractory composition according to claim 1, characterized in that the zirconia-alumina essentially comprises corundum and monoclinic zirconia.

4. Refractory composition according to claim 1, characterized in that the silicon proportion is between 1 and 2% by weight.

5. Process for the preparation of a refractory composition with a view to producing a given object, characterized in that it comprises the stages consisting of:

(a) - producing a mixture containing by weight

– 70 to 81% sintered and/or calcined alumina in divided form,

– 10 to 20% zirconia-alumina in divided form and containing by weight 20 to 40% zirconia and 60 to 80% alumina,

– 1 to 4% of a powder containing silicon,

– 2 to 7% carbon in divided form and

7

– 4 to 15% of a binder containing volatile carbon;

(b) - intensely stirring the mixture;

(c) - giving the mixture the shape of the object to be produced and

(d) - subjecting said mixture to a heat treatment in a reducing atmosphere, said treatment being performed at a temperature between 900 and 1500°C and preferably 1300 and 1500 °C for 1 to 10 hours.

6. Process according to claim 5, characterized in that the zirconia-alumina proportion in the mixture is between 15 and 20% by weight.

7. Process according to claim 5, characterized in that the zirconia-alumina essentially contains corundum and monoclinic zirconia.

8. Process according to claim 5, characterized in that the powder containing silicon is essentially formed by pure silicon.

9. Process according to claim 5, characterized in that the powder is constituted by an aluminium and silicon compound.

10. Process according to claim 5, characterized in that the size of the silicon grains is equal to or below 15 micrometers.

11. Process according to claim 5, characterized in that the silicon proportion in the mixture is between 1 and 2% by weight.

12. Process according to claim 5, characterized in that it also involves the following stages:

(e) - impregnating the mixture with an impregnation product and

(f) - subjecting the mixture to a stoving operation for eliminating the excess volatile products.

13. Process according to claim 12, characterized in that the impregnation product is chosen from among tars, pitches and resins.

14. Process according to claim 12, characterized in that the impregnation product proportion is equal to or below 14% by weight.